# EUROPÄISCHE PATENTSCHRIFT

(11) **EP 2 563 738 B1**
(45) Veröffentlichungstag und Bekanntmachung des Hinweises auf die Patenterteilung: **24.08.2016**
(21) Anmeldenummer: 11716198.4
(22) Anmeldetag: 12.04.2011
(51) Int. Cl.: C04B 28/08

(54) **ALKALI-AKTIVIERTES ALUMOSILIKAT-BINDEMITTEL ENTHALTEND GLASPERLEN**
ALKALI-ACTIVATED ALUMINOSILICATE BINDER CONTAINING GLASS BEADS
LIANT ALUMINOSILICATÉ À ACTIVATION ALCALINE CONTENANT DES BILLES DE VERRE

(30) Priorität: 26.04.2010 EP 10161010
(43) Veröffentlichungstag der Anmeldung: 06.03.2013
(73) Patentinhaber: Construction Research & Technology GmbH, 83308 Trostberg (DE)
(72) Erfinder: ELLENRIEDER, Florian, 86152 Augsburg (DE); MC ILHATTON, Michael, 86152 Augsburg (DE); HAGNER, Adolf, 86368 Gersthofen (DE)
(74) Vertreter: BASF IP Association
(86) Internationale Anmeldenummer: PCT/EP2011/055702
(87) Internationale Veröffentlichungsnummer: WO 2011/134783

(56) Entgegenhaltungen:
- EP-A1- 0 921 106
- EP-A1- 0 980 854
- EP-A2- 1 666 430
- DE-A1- 19 702 254
- DE-A1-102008 004 004
- DE-U1-202005 020 825
- US-B1- 6 296 699
- SKVARA F: "Alkali activated materials or geopolymers?", CERAMICS-SILIKATY, XX, PRAGUE, CZ, Bd. 51, Nr. 3, 1. März 2007 (2007-03-01), Seiten 173-177, XP002615949, ISSN: 0862-5468
- BUCHWALD A: "GEOPOLYMERE BINDEMITTEL - GEOPOLYMER BINDERS", ZKG INTERNATIONAL, BAUVERLAG BV., GETERSLOH, DE, Bd. 60, Nr. 12, 1. Dezember 2007 (2007-12-01), Seiten 78-84, XP001513487, ISSN: 0949-0205

## Beschreibung

Die vorliegende Erfindung betrifft ein Mischung enthaltend ein alkali-aktiviertes Alumosilikat-Bindemittel, welches nach dem Aushärten mindestens 25 Gew.-% Vollglaskugeln enthält, ein Verfahren zur Herstellung der Mischung sowie die Verwendung der erfindungsgemäßen Mischung als Fugenmörtel.

Alkali-aktivierte Alumosilikat-Bindemittel sind zementartige Materialien, die durch Umsetzung von mindestens zwei Komponenten gebildet werden. Bei der ersten Komponente handelt es sich um eine reaktive Feststoffkomponente, welche SiO₂ und Al₂O₃ enthält, z. B. Flugasche oder Metakaolin. Die zweite Komponente ist ein alkalischer Aktivator, z.B. Natrium-Wasserglas oder Natriumhydroxid. In Gegenwart von Wasser kommt es durch den Kontakt der beiden Komponenten zur Erhärtung durch Bildung eines alumosilikatischen, amorphen bis teilkristallinen Netzwerkes, welches wasserbeständig ist.

Der Prozess der Erhärtung erfolgt in Lösungen mit pH-Werten über 12 und unterscheidet sich vom Hydratationsprozess anorganischer Bindemittel, wie z.B. des Portlandzements. Bei diesem Prozess, der vorwiegend über die "Lösung" stattfindet, erfolgt ein Einbau von Al-Atomen (und wahrscheinlich auch der Ca-, Mg-Atome) in das ursprüngliche Silikatgitter der reaktiven Feststoffkomponente. Die Eigenschaften der nach dieser Methode hergestellten Produkte sind insbesondere von der Konzentration des alkalischen Aktivators und den Feuchtigkeitsverhältnissen abhängig.

Alkali-aktivierte Alumosilikat-Bindemittel wurden bereits in den 1950er Jahren von Glukhovsky untersucht. Das Interesse der Industrie an diesen Bindemitteln hat aufgrund der interessanten Eigenschaften dieser Systeme in den vergangenen Jahren beträchtlich zugenommen. Alkali-aktivierte Alumosilikat-Bindemittel gestatten Festigkeiten, die jene von Standardportlandzementen übersteigen können. Weiterhin härten diese Systeme sehr schnell aus und weisen eine sehr hohe Chemikalienresistenz und Temperaturbeständigkeit auf.

EP 1 236 702 A1 beschreibt beispielsweise eine Wasserglas enthaltende Baustoffmischung für die Herstellung von chemikalienbeständigen Mörteln auf Basis eines latent hydraulischen Bindemittels, Wasserglas sowie Metallsalz als Steuerungsmittel. Als latent hydraulischer Bestandteil kann dabei auch Hüttensand eingesetzt werden. Als Metallsalz werden Alkalisalze genannt und eingesetzt.

Einen Überblick hinsichtlich der als alkalisch-aktivierbare Alumosilikatbindemittel in Frage kommenden Substanzen gibt die Literaturstelle Alkali-Activated Cements and Concretes, Caijun Shi, Pavel V. Krivenko, Della Roy, (2006), 30-63 und 277-297.

WO 2008/017414 A1 beschreibt eine pumpbare Geopolymer-Formulierung für Ölfeld-Anwendungen. Die Formulierung zeichnet sich durch eine kontrollierbare Verdickungs- und Aushärtungszeit aus, welche über einen weiten Temperaturbereich erhalten bleibt. Neben zahlreichen anderen Füllstoffen wird auch der Einsatz von Glasperlen vorgeschlagen.

EP 1 666 430 A1 beschreibt ein Fugenfüllmaterial, insbesondere Fugenmörtel, welches ein Bindemittel und einen Zuschlagstoff umfasst, wobei der Zuschlagstoff im Wesentlichen aus Glasperlen besteht. Bei den Bindemitteln kommen vor allem transparente Bindemittel, wie etwa Epoxidharze oder Acrylate zum Einsatz. Der Fugenfüller lässt sich relativ leicht verarbeiten und reinigen.

Schmutzabweisende und leicht zu reinigende Oberflächen sind in vielen Anwendungsbereichen von großem Interesse. Die nach dem Stand der Technik eingesetzten schmutzabweisenden Oberflächen können sowohl superhydrophob als auch superhydrophil sein. Im Fall der superhydrophoben Oberflächen wird die Kontaktfläche und damit die Adhäsionskraft zwischen Oberfläche und auf ihr liegenden Partikeln bzw. Wasser so stark reduziert, dass es zur Selbstreinigung kommt. Diese Eigenschaft ist auch als Lotuseffekt bekannt. Im Gegensatz hierzu wird bei hydrophilen Systemen die Oberfläche so gestaltet, dass eine extrem hohe Oberflächenenergie (hohe Adhäsion) eintritt und der Wasserrandwinkel kleiner 1° wird. Hierdurch wird Wasser großflächig auf der Oberfläche verteilt, so dass Schmutz unterspült werden kann und sich somit leicht löst. Hierdurch kann Schmutz leicht von der Oberfläche abgespült werden. Beispielhaft für die Erzeugung hydrophiler Oberflächen soll hier das Aufbringen von feinkristallinem Titandioxid (Anatas-Modifikation) auf keramische Oberflächen genannt werden. Die bekannten hydrophilen und hydrophoben Systeme haben aber häufig nur eine begrenzte mechanische Beständigkeit, was ihre Wirkungsdauer einschränkt.

Die bekannten Oberflächen nach dem Stand der Technik weisen somit weiterhin keine optimalen Eigenschaften hinsichtlich Ihrer Anschmutzneigung und der Reinigbarkeit auf.

Der vorliegenden Erfindung lag daher die Aufgabe zugrunde, ein Bindemittelsystem zur Verfügung zu stellen, welches nach dem Aushärten eine Oberfläche mit sehr geringer Anschmutzneigung ausbildet. Die Oberfläche sollte weiterhin leicht zu reinigen sein und der Effekt der geringen Anschmutzneigung sollte auch über einen langen Zeitraum erhalten bleiben. Weiterhin sollte das Bindemittelsystem leicht zu verarbeiten sein und nach dem Aushärten eine hohe Festigkeit aufweisen. Insbesondere sollte sich das erfindungsgemäße Bindemittelsystem als Fugenfüllmaterial und insbesondere Fugenmörtel eignen.

Gelöst wurde diese Aufgabe durch eine Mischung enthaltend ein alkali-aktiviertes Alumosilikat-Bindemittel, wobei diese nach dem Aushärten mindestens 25 Gew.-% Vollglaskugeln, bevorzugt mindestens 35 Gew.-% Vollglaskugeln, insbesondere mindestens 45 Gew.-% Vollglaskugeln, besonders bevorzugt mindestens 55 Gew.-% Vollglaskugeln mit einem Durchmesser zwischen 0,01 bis 5 mm bezogen auf die Gesamtmasse enthält.

Abgesehen davon, dass die Aufgabenstellung in Bezug auf sämtliche Vorgaben vollständig erfüllt werden konnte, hat sich überraschenderweise herausgestellt, dass das erfindungsgemäße System auch nach langen Standzeiten eine hervorragende Oberflächenoptik aufweist. Weiterhin kann die Oberfläche auch ohne die Verwendung aggressiver Reinigungsmittel leicht gereinigt werden, wodurch ein positiver Beitrag zur Entlastung der Umwelt geleistet wird. In der Regel ist für die Reinigung die Verwendung von Wasser ausreichend.

Als Feststoffkomponente, welche SiO₂ und Al₂O₃ enthält, kann insbesondere mindestens ein Alumosilikat aus der Reihe der natürlichen Alumosilikate und/oder synthetischen Alumosilikate, insbesondere Hüttensandmehl, Mikrosilika, Trassmehl, Ölschiefer, Metakaolin, Flugasche, insbesondere vom Typ C und Typ F, Hochofenschlacke, aluminiumhaltiger Silikastaub, Puzzolane, Basalt, Tone, Mergel, Andesite, Diatomeenerde, Kieselgur oder Zeolithe, insbesondere bevorzugt Hüttensandmehl, Flugasche, Mikrosilica, Schlacke, Ton und Metakaolin eingesetzt werden. Das erfindungsgemäße Bindemittel enthält diese Feststoffkomponente vorzugsweise in einer Menge von 5 bis 70 Gew.-%, bevorzugt von 10 bis 50 Gew.-%, und insbesondere von 15 bis 30 Gew.-%, wobei es sich auch um Mischungen handeln kann. Für die Härtungsreaktion der alkali-aktivierten Alumosilikat-Bindemittel ist insbesondere das Verhältnis von Siliciumzu Aluminium-Atomen von großer Bedeutung. In dem erfindungsgemäßen System hat sich ein Verhältnis von Silicium- zu Aluminium-Atomen zwischen 30 und 1,0 als vorteilhaft erwiesen, wobei ein Verhältnis zwischen 6 und 1,5 und insbesondere zwischen 1,8 und 2,2 sowie zwischen 4,7 und 5,3 bevorzugt ist.

Als alkalischer Aktivator eignet sich insbesondere eine Verbindung aus der Reihe Natrium-Wasserglas, Kalium-Wasserglas, Lithium-Wasserglas, Ammonium-Wasserglas, Natriumhydroxid, Kaliumhydroxid, Natriumcarbonat, Kaliumcarbonat, Alkalisulfate, Natriummetasilikat, Kaliummetasilikat, bevorzugt Kalium-Wasserglas. Erfindungsgemäß ist der alkalische Aktivator vorzugsweise in einer Menge von 0,1 bis 50 Gew.-%, bevorzugt von 2 bis 25 Gew.-%, und insbesondere von 5 bis 20 Gew.-% enthalten, wobei es sich auch um Mischungen dieser Verbindungen handeln kann.

Als besonders geeignet haben sich Vollglaskugelnmit einem Durchmesser zwischen 0,05 bis 2 mm, besonders bevorzugt zwischen 0,1 und 1 mm erwiesen. Bevorzugt wird eine Mischung von Vollglaskugeln mit unterschiedlichen Durchmessern eingesetzt, um eine möglichst glatte Oberfläche zu erzielen. Das verwendete Glasmaterial ist keinen speziellen Beschränkungen unterworfen, solange es mit dem Bindemittel kompatibel ist. Als Glas kommt insbesondere A-, C-, E- und AR-Glas in Frage. Besonders geeignet ist E- und AR-Glas.

Als weitere Bestandteile kann das erfindungsgemäße System zusätzlich mindestens eine Füllstoff-, Kunststoff-, Additiv- und/oder Pigment-Komponente enthalten. Als Additivkomponente kommen weiterhin Härtungsbeschleuniger wie Aluminiumphosphat, Entschäumer, Rheologiemodifizierer und Dispergierhilfsmittel in Frage. Bevorzugt enthält die Gesamtmischung von 0,01 bis 50 Gew.-%, mindestens eine dieser weiteren Bestandteile, und insbesondere von 0,3 bis 30 Gew.-%.

Unter der Kunststoff-Komponente sind insbesondere redispergierbare Polymerpulver oder im Falle von 2K-Bindemitteln auch flüssige Dispersionen zu verstehen, welche vorzugsweise aus mindestens einem Vertreter der Reihe Vinylacetat, Acrylat, Styrol, Butadien, Ethylen, Versatinsäure-Vinylester, Harnstoff-Formaldehyd-Kondensationsprodukte und Melamin-Formaldehyd-Kondensationsprodukte aufgebaut sind, sowie beispielsweise Polyethylenfasern oder Polypropylenfasern. Als Pigment-Komponente kann beispielsweise Titandioxid eingesetzt werden.

Bei den Füllstoffen kommen unter anderem Gesteinsmehl, Basalte, Tone, Feldspate, Glimmermehl, Glasmehl, Quarzsand oder Quarzmehl, Bauxitmehl, Tonerdehydrat und Abfälle der Tonerde-, Bauxit-, oder Korundindustrie, Aschen, Schlacken, amorphes Silika, Kalkstein sowie mineralische Fasermaterialien in Frage. Auch Leichtfüllstoffe wie Perlite, Kieselgur (Diatomeenerde), Blähglimmer (Vermiculit) und Schaumsand können verwendet werden. Bevorzugt werden Füllstoffe aus der Reihe Kalkstein, Quarze und amorphes Silika eingesetzt.

In einer bevorzugten Ausführungsform sind in der erfindungsgemäßen Mischung zwischen 2 und 60 Gew.-% Wasser enthalten, und insbesondere von 5 bis 40 Gew.-%.

Zur Reduktion des Wasser/Bindemittelverhältnisses können dem System weiterhin Plastifizierungsmittel und/oder Superverflüssiger zugesetzt werden. Hierbei sind insbesondere Mengen von 0,1 bis 3 Gew.-% als bevorzugt anzusehen.

Die erfindungsgemäße Mischung eignet sich auch für den Einsatz in Verbindung mit anorganischen bzw. hydraulischen bzw. mineralischen Bindemitteln, wie Zement, insbesondere Portlandzement, Portlandhüttenzement, Portlandsilicastaubzement, Portlandpuzzolanzement, Portlandflugaschezement, Portlandschieferzement, Portlandkalksteinzement, Portlandkompositzement, Hochofenzement, Puzzolanzement, Kompositzement, Zement mit niedriger Hydratationswärme, Zement mit hohem Sulfatwiderstand, Zement mit niedrigem wirksamen Alkaligehalt sowie gebranntem Kalk, Gips (α - Halbhydrat, ß-Halbhydrat, α /ß-Halbhydrat) und Anhydrit (natürlicher Anhydrit, synthetischer Anhydrit, REA-Anhydrit). Das Mengenverhältnis des eingesetzten alkaliaktivierten anorganischen Bindemittels zum anorganischen bzw. hydraulischen bzw. mineralischen Bindemittel kann in weiten Bereichen variiert werden. Insbesondere haben sich Verhältnisse von 1 : 100 bis 100 : 1, bevorzugt 1 : 20 bis 20 : 1 und insbesondere 3 : 1 bis 1 : 3. als vorteilhaft erwiesen. Bevorzugt enthält das System jedoch keine weiteren anorganischen bzw. hydraulischen bzw. mineralischen Bindemittel.

In einer bevorzugten Ausführungsform enthält die erfindungsgemäße Mischung enthaltend ein alkali-aktiviertes Alumosilikat-Bindemittel folgende Komponenten:

| | |
|---|---|
| 15 bis 60 Gew.-% | reaktive Feststoffkomponente (enthaltend SiO₂ und Al₂O₃) |
| 1 bis 40 Gew.-% | alkalischen Aktivator |
| 25 bis 70 Gew.-% | Vollglaskugeln0 bis 80 Gew.-% Füllstoffe |
| 5 bis 40 Gew.-% | Wasser |

In einer besonders vorteilhaften Ausführung enthält die Mischung

| | |
|---|---|
| 15 bis 35 Gew.-% | reaktive Feststoffkomponente (enthaltend SiO₂ und Al₂O₃) |
| 1 bis 20 Gew.-% | alkalischen Aktivator |
| 45 bis 65 Gew.-% | Vollglaskugeln |
| 0 bis 40 Gew.-% | Füllstoffe |
| 7 bis 15 Gew.-% | Wasser |

In einer bevorzugten Ausführungsform ist es möglich, pulverförmige alkalische Aktivatoren gemäß einer der bevorzugten Ausführungsformen der Erfindung der reaktive Feststoffkomponente beizumischen oder damit die reaktive Feststoffkomponente und gegebenenfalls die Glaskugeln zu beschichten. Dadurch erhält man ein 1-Komponentensystem (1-K System), welches nachfolgend durch die Zugabe von Wasser aktivierbar ist.

2-Komponentensysteme (2-K Systeme) sind dadurch gekennzeichnet, dass eine Zugabe einer bevorzugt wässrigen alkalischen Aktivatorlösung zur reaktiven Feststoffkomponente erfolgt. Hierbei sind wiederum die alkalischen Aktivatoren gemäß der bevorzugten Ausführungsformen der Erfindung geeignet. Es ist hierbei bevorzugt, dass die erfindungsgemäßen Vollglaskugeln mit der reaktiven Feststoffkomponente eingesetzt werden.

Ein weiterer Gegenstand der vorliegenden Erfindung ist ein Verfahren zur Herstellung einer erfindungsgemäßen Mischung enthaltend ein alkali-aktiviertes Alumosilikat-Bindemittel, welche nach dem Aushärten mindestens 25 Gew.-% der Vollglaskugeln enthält. Das Verfahren ist erfindungsgemäß dadurch gekennzeichnet, dass man die reaktive Feststoffkomponente, den alkalischen Aktivator, Vollglaskugeln mit einem Durchmesser zwischen 0,01 bis 5 mm und Wasser sowie optional weitere Komponenten homogen miteinander vermischt. Die Zugabereihenfolge der Komponenten ist unkritisch, es hat sich jedoch als vorteilhaft erwiesen, Wasser und den alkalischen Aktivator vorzulegen und anschließend die reaktive Feststoffkomponente und die Vollglaskugeln zuzugeben. Das Verfahren kann sowohl diskontinuierlich als auch kontinuierlich durchgeführt werden, wobei als Apparaturen statische Mischer, Extruder, Rilem-Mischer und Bohrmaschinen mit Rühraufsätzen geeignet sind. Durch das Rühren der kombinierten flüssigen und festen Bestandteile wird das Bindemittel aktiviert, was zum Erhärten des Mörtels führt. Im Fall der 1-Komponentensysteme muss die erfindungsgemäße Mischung nur mit Wasser homogen vermischt werden.

Die erfindungsgemäße Mischung enthaltend ein alkali-aktiviertes Alumosilikat-Bindemittel wird vorzugsweise als Fugenfüller und insbesondere Fugenmörtel verwendet. Ein weiterer Gegenstand der vorliegenden Erfindung ist somit ein Fugenmörtel auf Basis eines alkali-aktivierten Alumosilikat-Bindemittels, wobei dieser nach dem Aushärten mindestens 25 Gew.-% Vollglaskugeln, bevorzugt mindestens 35 Gew.-% Vollglaskugeln, insbesondere mindestens 45 Gew.-% Vollglaskugeln, besonders bevorzugt mindestens 55 Gew.-% Vollglaskugeln bezogen auf die Gesamtmasse aufweist.

Zur Herstellung solcher Fugenfüller und insbesondere Fugenmörtel wird die oben beschriebene Mischung üblicherweise mit weiteren Komponenten wie Füllstoffen, latent hydraulischen Stoffen und weiteren Additiven gemischt. Die Zugabe des pulverförmigen alkalischen Aktivators erfolgt dabei bevorzugt bevor die genannten Komponenten mit Wasser angemischt werden, sodass ein sogenannter Werktrockenmörtel hergestellt wird. So liegt die alkalische Aktivierungskomponente in pulverförmiger Form, bevorzugt als Mischung mit der reaktiven Feststoffkomponente, Vollglaskugeln und ggf. Füllstoffen vor (1 K-System). Alternativ kann der wässrige alkalische Aktivator zu den anderen pulverförmigen Komponenten zugegeben werden. Es ist aber auch möglich die pulverförmigen Komponenten zunächst mit Wasser zu mischen und anschließend den alkalischen Aktivator zuzusetzen. In diesen Fällen spricht man dann von einem zweikomponentigen Bindemittelsystem (2-K System).

Weiterhin wird mit der vorliegenden Erfindung die Verwendung von Vollglaskugeln mit einem Durchmesser zwischen 0,01 bis 5 mm in einem Fugenmörtel beansprucht, welcher ein alkali-aktiviertes Alumosilikat-Bindemittel umfasst und welcher nach dem Aushärten mindestens 25 Gew.-% der Vollglaskugeln enthält, zur Verringerung der Verschmutzungsneigung der hergestellten Fuge.

Die erfindungsgemäße Mischung kann auch vorteilhaft als Estrich, Beschichtung, Putz, Anstrichfarbe, Straßenmarkierung und insbesondere als Anti-Graffiti-Beschichtung verwendet werden.

Ein weiterer Gegenstand der vorliegenden Erfindung ist ein ausgehärtetes Produkt, welches die erfindungsgemäße Mischung enthaltend ein alkali-aktiviertes Alumosilikat-Bindemittel und mindestens 25 Gew.-% Vollglaskugeln mit einem Durchmesser zwischen 0,01 bis 5 mm bezogen auf die Gesamtmasse umfasst. Die erfindungsgemäße Mischung wird vorzugsweise zwischen - 10 und 90°C ausgehärtet. Je nach Zusammensetzung werden schon nach wenigen Stunden sehr gute Festigkeiten erreicht, so dass die hergestellten Gegenstände, insbesondere Fugen, in den meisten Fällen schon nach 4 bis 10 Stunden nahezu volle Belastbarkeit gewährleisten. In einer besonderen Ausführungsform handelt es sich bei dem ausgehärteten Produkt um eine Fugenfüllung.

Das erfindungsgemäße System besitzt eine gute Verarbeitbarkeit und das ausgehärtete Produkt weist eine superhydrophile Oberfläche sowie eine hohe Chemikalienresistenz, Haltbarkeit und Temperaturbeständigkeit auf. Die geringe Anschmutzneigung der Oberflächen bleibt auch über einen sehr langen Zeitraum praktisch unverändert erhalten. Weiterhin besitzen Fugen, welche aus der erfindungsgemäßen Mischung hergestellt sind, eine gute Oberflächenoptik.

Die nachfolgenden Beispiele und die Testmethode verdeutlichen die Vorteile der vorliegenden Erfindung.

### Beispiele

### Testmethode:

Alle pulverförmigen Stoffe werden homogenisiert und daraufhin mit der Flüssigkomponente angemischt. Bei den Beispielen, die nur pulverförmige Bestandteile enthalten ist die Anmachflüssigkeit Wasser. Bei 2-komponentigen Mischungen wird der alkalische Aktivator separat zugegeben, wobei es sich dann hierbei um die Flüssigkomponente handelt.

Die Abmischungen werden ca. eine Minute gerührt bis eine homogene, klumpenfreie Masse entsteht. Nach einer Reifezeit von drei Minuten werden die Mörtel wiederum gerührt und auf einer mit glasiertem Feinsteinzeug gefliesten Betonplatte eingefugt. Nach einer Aushärtungszeit von 7 Tagen bei Normklima werden Verschmutzungstests mit einem Fleckbildner nach DIN EN 14411 durchgeführt. Bei diesem Fleckbildner handelt es sich um eine Abmischung aus Rost und Mineralöl. Die Verfleckung wird in Form von Tropfen sowohl auf die Fliesen als auch auf die erhärteten Fugenmörtel aufgetragen. Hierzu werden je Probefläche gleich viele Tropfen des Fleckbildners aufgebracht. Der Fleckbildner wird 10 Minuten auf der verschmutzten Oberfläche belassen. Die so behandelten Platten werden daraufhin für 10 Minuten unter Wasser gelagert. Nach dem Herausnehmen aus dem Wasserbad werden die verfugten Fliesenoberflächen durch Abgießen von überschüssigem Wasser befreit und der Grad der Verschmutzung beurteilt. In einem zusätzlichen Schritt können verbleibende Anschmutzungsrückstände noch mit einer Handbürste nachgereinigt werden.
Die Beurteilung der Entfernbarkeit des Testmediums kann in folgenden Stufen vorgenommen werden:

| | |
|---|---|
| + + | sehr gut entfernbar (rückstandsfrei ohne mechanische Unterstützung) |
| + | gut entfernbar (rückstandsfrei mit mechanischer Unterstützung) |
| O | teilweise entfernbar (Rückstand ohne mechan. Unterstützung) |
| - | kaum entfernbar (Rückstand mit mechan. Unterstützung) |
| - - | nicht entfernbar (Fleckbildner nicht entfernbar, mit mechan. Unterstützung) |

Die hier eingesetzten Vollglaskugeln haben einen Durchmesser von 0,01 mm - 0,75 mm.

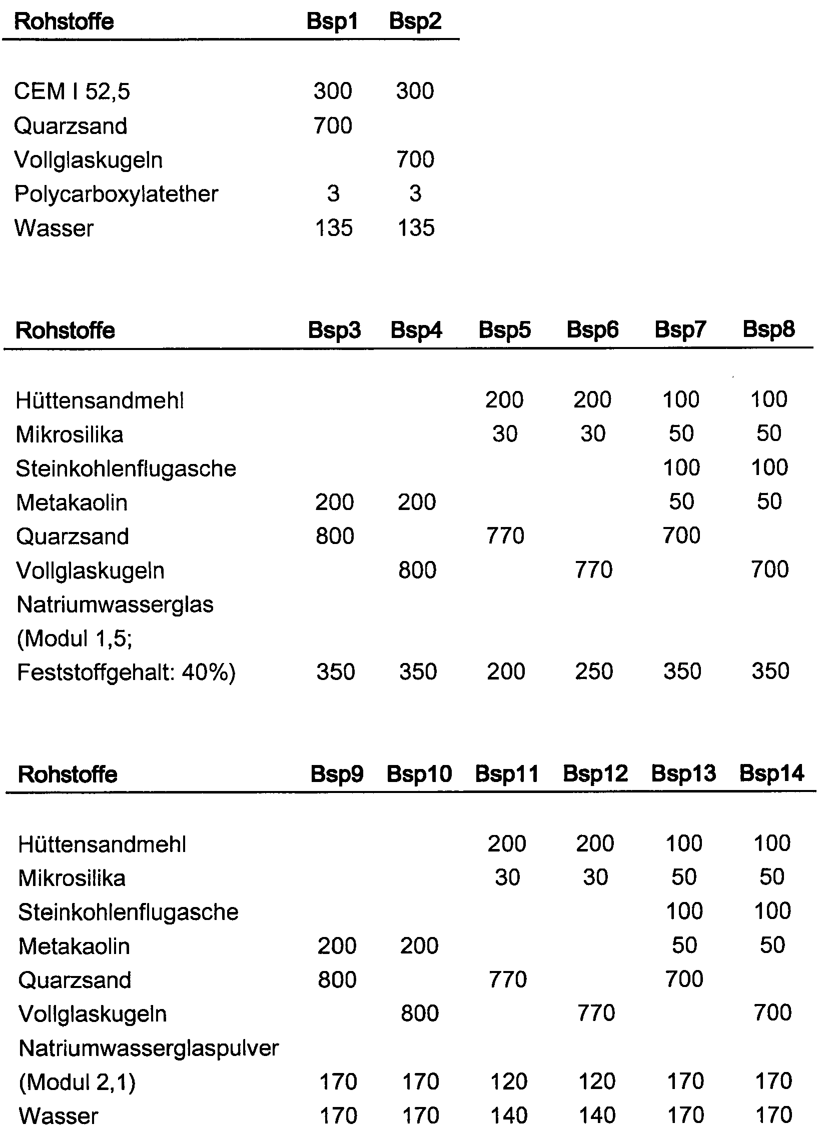

Die Beispiele 4, 6, 8, 10, 12 und 14 sind erfindungsgemäß.

Beurteilung der Anschmutzungsneigung und Reinigbarkeit:

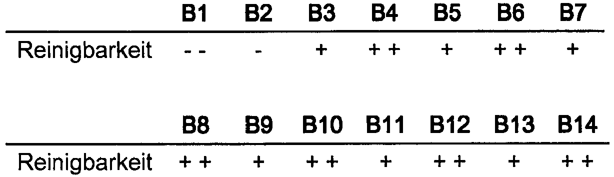

## Patentansprüche

1. Mischung enthaltend ein alkali-aktiviertes Alumosilikat-Bindemittel, **dadurch gekennzeichnet, dass** diese nach dem Aushärten mindestens 25 Gew.-% Vollglaskugeln mit einem Durchmesser zwischen 0,01 bis 5 mm bezogen auf die Gesamtmasse enthält.

2. Mischung nach Anspruch 1, **dadurch gekennzeichnet, dass** es sich bei dem alkalischen Aktivator um mindestens eine Verbindung aus der Reihe Natrium-Wasserglas, Kalium-Wasserglas, Lithium-Wasserglas, Ammonium-Wasserglas, Natriumhydroxid, Kaliumhydroxid, Natriumcarbonat, Kaliumcarbonat, Alkalisulfate, Natriummetasilikat und Kaliummetasilikat handelt.

3. Mischung nach Anspruch 1 oder 2, **dadurch gekennzeichnet, dass** es sich um mindestens ein Alumosilikat aus der Reihe der natürlichen Alumosilikate und/oder synthetischen Alumosilikate handelt.

4. Mischung nach einem der Ansprüche 1 bis 3, **dadurch gekennzeichnet, dass** das Verhältnis von Silicium- zu Aluminium-Atomen zwischen 30 und 1 liegt.

5. Mischung nach einem der Ansprüche 1 bis 4, **dadurch gekennzeichnet, dass** diese zusätzlich mindestens eine Füllstoff-, Kunststoff-, Additiv- und/oder Pigment-Komponente enthält.

6. Mischung nach einem der Ansprüche 1 bis 5, **dadurch gekennzeichnet, dass** diese zur Reduktion des Wasser/Bindemittelverhältnisses Plastifizierungsmittel und/oder Superverflüssiger in Mengen von 0,1 bis 3 Gew.-% enthält.

7. Mischung nach einem der Ansprüche 1 bis 6, **dadurch gekennzeichnet, dass** diese einkomponentig ist.

8. Verfahren zur Herstellung einer Mischung nach einem der Ansprüche 1 bis 7, welche nach dem Aushärten mindestens 25 Gew.-% der Vollglaskugeln enthält, wobei mindestens ein Alumosilikat, mindestens ein alkalischer Aktivator, Wasser und Vollglaskugeln mit einem Durchmesser zwischen 0,01 bis 5 mm sowie optional weitere Komponenten homogen miteinander vermischt werden.

9. Ausgehärtetes Produkt erhältlich durch ein Verfahren gemäß Anspruch 8.

10. Ausgehärtetes Produkt nach Anspruch 9, **dadurch gekennzeichnet, dass** es sich um eine Fugenfüllung handelt.

11. Verwendung von Vollglaskugeln mit einem Durchmesser zwischen 0,01 bis 5 mm in einem Fugenmörtel, welcher ein alkali-aktiviertes Alumosilikat-Bindemittel umfasst und welcher nach dem Aushärten mindestens 25 Gew.-% der Vollglaskugeln enthält, zur Verringerung der Verschmutzungsneigung der hergestellten Fuge.

## Claims

1. Mixture containing an alkali-activated aluminosilicate binder, **characterized in that**, after hardening, it contains at least 25% by weight of solid glass spheres having a diameter between 0.01 and 5 mm, based on the total mass.

2. Mixture according to Claim 1, **characterized in that** the alkaline activator is at least one compound from the series consisting of sodium waterglass, potassium waterglass, lithium waterglass, ammonium waterglass, sodium hydroxide, potassium hydroxide, sodium carbonate, potassium carbonate, alkali metal sulphates, sodium metasilicate and potassium metasilicate.

3. Mixture according to Claim 1 or 2, **characterized in that** at least one aluminosilicate from the series consisting of the natural aluminosilicates and/or synthetic aluminosilicates is present.

4. Mixture according to any of Claims 1 to 3, **characterized in that** the ratio of silicon atoms to aluminium atoms is between 30 and 1.

5. Mixture according to any of Claims 1 to 4, **characterized in that** it additionally contains at least one filler, plastic, additive and/or pigment component.

6. Mixture according to any of Claims 1 to 5, **characterized in that** it contains plasticizers and/or superplasticizers in amounts of 0.1 to 3% by weight for reducing the water/binder ratio.

7. Mixture according to any of Claims 1 to 6, **characterized in that** it comprises one component.

8. Process for the preparation of a mixture according to any of Claims 1 to 7, which, after hardening, contains at least 25% by weight of the solid glass spheres, at least one aluminosilicate, at least one alkaline activator, water and solid glass spheres having a diameter between 0.01 and 5mm and optionally further components being homogeneously mixed with one another.

9. Hardened product obtainable by a process according to Claim 8.

10. Hardened product according to Claim 9, **characterized in that** it is a joint filler.

11. Use of solid glass spheres having a diameter between 0.01 and 5mm in a joint mortar which comprises an alkali-activated aluminosilicate binder and which, after hardening, contains at least 25% by weight of the solid glass spheres, for reducing the tendency of the joint produced to soil.

## Revendications

1. Mélange contenant un liant alumosilicate activé par un alcali, **caractérisé en ce que** celui-ci contient après le durcissement au moins 25 % en poids de billes de verre entières d'un diamètre compris entre 0,01 et 5 mm, par rapport à la masse totale.

2. Mélange selon la revendication 1, **caractérisé en ce que** l'activateur alcalin est au moins un composé de la série constituée par le verre soluble de sodium, le verre soluble de potassium, le verre soluble de lithium, le verre soluble d'ammonium, l'hydroxyde de sodium, l'hydroxyde de potassium, le carbonate de sodium, le carbonate de potassium, les sulfates alcalins, le métasilicate de sodium et le métasilicate de potassium.

3. Mélange selon la revendication 1 ou 2, **caractérisé en ce qu'**il s'agit d'au moins un alumosilicate de la série constituée par les alumosilicates naturels et/ou les alumosilicates synthétiques.

4. Mélange selon l'une quelconque des revendications 1 à 3, **caractérisé en ce que** le rapport entre les atomes de silicium et d'aluminium est compris entre 30 et 1.

5. Mélange selon l'une quelconque des revendications 1 à 4, **caractérisé en ce que** celui-ci contient en outre au moins un composant charge, plastique, additif et/ou pigment.

6. Mélange selon l'une quelconque des revendications 1 à 5, **caractérisé en ce que** celui-ci contient pour la réduction du rapport eau/liant des agents plastifiants et/ou des super-liquéfiants en quantités de 0,1 à 3 % en poids.

7. Mélange selon l'une quelconque des revendications 1 à 6, **caractérisé en ce que** celui-ci est monocomposant.

8. Procédé de fabrication d'un mélange selon l'une quelconque des revendications 1 à 7, qui contient après le durcissement au moins 25 % en poids de billes de verre entières, selon lequel au moins un alumosilicate, au moins un activateur alcalin, de l'eau et des billes de verre entières d'un diamètre compris entre 0,01 et 5 mm, ainsi qu'éventuellement d'autres composants sont mélangés de manière homogène les uns avec les autres.

9. Produit durci pouvant être obtenu par un procédé selon la revendication 8.

10. Produit durci selon la revendication 9, **caractérisé en ce qu'**il s'agit d'un remplissage de joints.

11. Utilisation de billes de verre entières d'un diamètre compris entre 0,01 et 5 mm dans un mortier de jointoiement, qui comprend un liant alumosilicate activé par un alcali et qui contient après le durcissement au moins 25 % en poids des billes de verre entières, pour réduire la tendance à l'encrassement du joint fabriqué.
